# EUROPÄISCHE PATENTSCHRIFT

(11) **EP 1 093 567 B1**
(45) Veröffentlichungstag und Bekanntmachung des Hinweises auf die Patenterteilung: **20.10.2004**
(21) Anmeldenummer: 99942751.1
(22) Anmeldetag: 01.07.1999
(51) Int. Cl.: G01D 5/48, G01D 5/26, G01L 5/22, B25J 19/00

(54) **ANORDNUNG UND VERFAHREN ZUR ERMITTLUNG EINER RELATIVEN LAGE ZWEIER OBJEKTE**
DEVICE AND METHOD FOR DETERMINING A RELATIVE POSITION OF TWO OBJECTS WITH REGARD TO ONE ANOTHER
DISPOSITIF ET PROCEDE POUR LA DETERMINATION DE LA POSITION RELATIVE DE DEUX OBJETS

(30) Priorität: 09.07.1998 DE 19830831
(43) Veröffentlichungstag der Anmeldung: 25.04.2001
(73) Patentinhaber: SIEMENS AKTIENGESELLSCHAFT, 80333 München (DE)
(72) Erfinder: MAGNUSSEN, Björn, D-81739 München (DE)
(86) Internationale Anmeldenummer: PCT/DE1999/001933
(87) Internationale Veröffentlichungsnummer: WO 2000/003204

(56) Entgegenhaltungen:
- EP-A- 0 441 060
- DE-A- 3 012 811
- DE-A- 4 302 434
- US-A- 4 475 814
- US-A- 5 126 946

## Beschreibung

Die Erfindung bezieht sich auf die Ermittlung einer relativen Lage zweier Objekte zueinander.

Bedingt durch den elektronischen und elektrotechnischen Fortschritt, wird in zunehmenden Maße ein Roboter für die Montageaufgabe eingesetzt. Dieser Roboter ist mit einem flexiblen Greifsystem ausgestattet, das in der Lage ist, verschiedenste Griffe und Manipulationsaufgaben durchzuführen.

Dokument [1] gibt einen Überblick über technische Systeme, die für das Greifen und die Manipulation eines Objekts eingesetzt werden. Ferner ist aus [1] bekannt, daß das gegriffene Objekt sich in einer fest vorgegebenen Lage zum Greifersystem befinden muß und zwar so, daß eine vorgebbare Kraft auf das Objekt ausgeübt werden kann.

Aus [1] ist bekannt, daß Manipulation bedeutet, daß die Lage des gegriffenen Objekts und gegebenenfalls seine Orientierung im Raum in vorgegebener Weise geändert wird.

Damit zeigt sich, daß im Zusammenhang mit einem Greifsystem die Bestimmung der relativen Lage des gegriffenen Objekts zum Greifer und die auf das gegriffene Objekt ausgeübte Kraft von besonderer Bedeutung ist.

Aus [1] ist ferner bekannt, daß für die Lage- und die Kraftermittlung ein sogenannter Objekt- und Kontaktsensor verwendet wird.

Unter einem Objektsensor wird ein Sensor verstanden, der die Position eines Objekts erfaßt. Mit einem solchen Sensor wird die Position eines Objekts bestimmt, ein bekanntes Objekt erkannt und identifiziert sowie ein unbekanntes Objekt vermessen.

Eine typische Ausführung dieses Sensors ist ein Ultraschall-Abstandssensor, ein Laser-Abstandssensor oder ein Kamerasichtsystem.

Unter einem Kontaktsensor wird ein Sensor verstanden, der eine Aussage über den Kontakt des Greifers mit einem Objekt ermöglicht. Dabei können die an der Kontaktfläche zwischen Greifer und Objekt meßbaren Größen in qualitative und quantitative Informationen unterteilt werden. Qualitativ erfaßbar sind beispielsweise räumliche Kräfte und Momente sowie der Kraftangriffspunkt. Aus diesen Größen lassen sich weitere Kontaktgrößen wie Greif- und Haltekräfte bestimmen. Der zur Erfassung dieser Größen verwendete Sensor wird auch als Kraftsensor bezeichnet.

Im Gegensatz dazu mißt ein sogenannter taktiler Sensor häufig eine rein qualitative Größe. Eine wichtige qualitative Information besteht beispielsweise darin, ob eine Greifbacke eines Zweibackengreifers, wie in [1] beschrieben ist, Kontakt zu einem Objekt hat. Dies ist bei einem leichten Objekt unter ausschließlicher Verwendung eines Kraftsensors oft schwer entscheidbar. Die Art des Kontakts ist eine andere wichtige qualitative Information. Ferner wird angestrebt, durch einen taktilen Sensor die Form und Oberflächenbeschaffenheit des gegriffenen Objekts zu bestimmen. Weiter kann durch einen taktilen Sensor das Rutschen des Objekts ermittelt werden. Ferner kann mit dem taktilen Sensor ein Objekt erkannt, unterschieden und eine Aussage über die Position und die Lage des gegriffenen Objekts getroffen werden.

Häufig verwendete Ausführungen eines Kontaktsensors sind ein Dehnmeßstreifen, eine Piezokeramik oder ein Halbleiterdrucksensor.

Ferner ist aus [2] bekannt, daß der Objekt- und der Kontaktsensor verschiedene Nachteile aufweisen. So ist der Laser-Abstandssensor und das Kamerasichtsystem teuer und stellt hohe Anforderungen an eine Auswerteelektronik. Im Gegensatz dazu weist der Ultraschall-Abstandssensor zwar einen niedrigen Preis und eine große Robustheit auf. Doch die Genauigkeit eines derartigen Sensors, dessen Störanfälligkeit gegenüber einer Temperaturschwankung, einem Fremdsignal oder einer Mehrfachreflexion, die geringe Winkelauflösung und die geringe Reichweite des Sensors machen dessen Einsatz nur bedingt möglich.

Ein weiterer Nachteil der bekannten Sensoren liegt darin, daß für die gleichzeitige Messung einer quantitativen und qualitativen Zustandsgröße mehrere Sensoren nötig sind. Dies führt wiederum dazu, daß die Bauteilgröße eines solchen kombinierten Sensors größer ist als im Vergleich zu einem einzelnen Sensor.

Figure 1 in der DE-A1-43 02 434 zeigt eine entsprechende Anordnung mit 4 Strahlungskeulen.

Der Erfindung liegt das Problem zugrunde, auf einfache, flexible und kostengünstige Art und Weise sowie mit der Möglichkeit einer Miniaturisierung des Meßsystems die relative Lage zweier Objekte zueinander zu ermitteln.

Das Problem wird durch die Anordnung gemäß Patentanspruch 1, den Satz mit mehreren Anordnungen gemäß Patentanspruch 16 sowie durch das Verfahren gemäß Patentanspruch 21 gelöst.

Die Anordnung zur Ermittlung einer relativen Lage zweier Objekte zueinander umfaßt eine Strahlungsquelle, die so eingerichtet ist, daß sie Strahlung mit einem charakteristischen Strahlungsfeld erzeugt. Weiter umfaßt die Anordnung einen Empfänger, der für den Empfang der Strahlung eingerichtet ist, und eine mit dem Empfänger gekoppelte Auswerteeinheit, mit der aus von dem Empfänger empfangenen Signalen, die abhängig vom Empfangsort im charakteristischen Strahlungsfeld sind, die relative Lage der Objekte zueinander bestimmbar ist.

Unter dem charakteristischen Strahlungsfeld der Strahlungsquelle wird folgendes verstanden:
Die Strahlungsquelle gibt Strahlung ab und erzeugt damit ein dreidimensionales Strahlungsfeld. An jedem Punkt in dem dreidimensionalen Strahlungsfeld besitzt die Strahlung bekannte Strahlungsgrößen, wobei aus den bekannten Strahlungsgrößen eindeutig der jeweilige Punkt ermittelt werden kann.

Der Satz mit mehreren Anordnungen zur Ermittlung einer relativen Lage zweier Objekte zueinander umfaßt mehrere Anordnungen, wobei jede Anordnung eine Strahlungsquelle, die derart eingerichtet ist, daß sie Strahlung mit einem charakteristischen Strahlungsfeld erzeugt, und einen Empfänger, der für den Empfang der Strahlung eingerichtet ist, umfaßt. Ferner umfaßt der Satz mit mehreren Anordnungen mindestens eine mit den Empfängern gekoppelte Auswerteeinheit, mit der aus jeweils von einem Empfänger empfangenen Signalen, die jeweils abhängig von dem Empfangsort im charakteristischen Strahlungsfeld sind,
die relative Lage der Objekte zueinander bestimmbar ist.

Bei dem Verfahren zur Ermittlung einer relativen Lage zweier Objekte zueinander werden folgende Schritte durchgeführt:
a)eine Strahlungsquelle erzeugt Strahlung mit einem charakteristischen Strahlungsfeld;
b)ein Empfänger mißt Strahlungsgrößen der Strahlung;
c)der Empfänger überträgt Signale, die abhängig von den gemessenen Strahlungsgrößen im charakteristischen Strahlungsfeld sind, an die Auswerteeinheit;
d)die Auswerteeinheit bestimmt in Abhängigkeit von den von dem Empfänger empfangenen Signalen die relative Lage der Objekte zueinander.

Durch die Erfindung wird ein sehr einfaches Verfahren und eine sehr einfache Anordnung für einen Lagesensor geschaffen. Dieser Lagesensor ermöglicht es, mit nur einem Sensor sechs Bewegungsfreiheitsgrade gleichzeitig zu messen. Die Erfindung läßt zusätzlich die Miniaturisierung einer derartigen Anordnung zu. Somit kann ein solcher Sensor kostengünstig produziert und äußerst flexibel eingesetzt werden.

Bevorzugte Weiterbildungen der Erfindung ergeben sich aus den abhängigen Ansprüchen.

Die Anordnung von Strahlungsquelle und Empfänger kann auf unterschiedliche Weise erfolgen. Es hat sich als vorteilhaft hinsichtlich einer weiteren Vereinfachung der Erfindung herausgestellt, daß entweder das erste Objekt die Strahlungsquelle und das zweite Objekt den Empfänger oder das erste Objekt sowohl die Strahlungsquelle als auch den Empfänger trägt. In diesem Fall ist das zweite Objekt mit einem Reflektor ausgestaltet.

Vorzugsweise ist das charakteristische Strahlungsfeld ein unsymmetrisches Strahlungsfeld. Dadurch ergeben sich Vereinfachungen bei der Auswertung der Strahlungsgrößen.

In einer weiteren Ausgestaltung ist es vorgesehen, daß die zwei Objekte durch eine elastische Verbindung vorgegebener Steifigkeit miteinander verbunden sind. Damit ist zusätzlich eine zwischen den Objekten wirkende Kraft und/oder ein zwischen den Objekten wirkendes Moment bestimmbar.

Aus Kostengründen ist es vorteilhaft, folgende elastischen Verbindungen zu verwenden:
a)mindestens ein Federelement,
b)Silikon,
c) Schaumstoff.
Weist die elastische Verbindung elektrische Leitfähigkeit auf, so ist es möglich, die elastische Verbindung auch als elektrischen Leiter zu nutzen.

Um mit einer derartigen Anordnung die zwischen den Objekten wirkende Kraft und/oder das zwischen den Objekten wirkendes Moment zu bestimmen, ist die mit dem Empfänger gekoppelte Auswerteeinheit in einer Ausgestaltung so eingerichtet, daß aus den von dem Empfänger empfangenen Signalen in Abhängigkeit von der Steifigkeit der Verbindung Kräfte und/oder Momente bestimmbar sind. Ein derartiger Kraftsensor arbeitet in der Ausgestaltung nach folgendem Verfahren:
a)die Strahlungsquelle erzeugt in einer ersten relativen Lage der Objekte zueinander das charakteristisches Strahlungsfeld;
b)der Empfänger mißt die Strahlungsgrößen der Strahlung in der ersten Lage;
c)der Empfänger überträgt die Signale, die abhängig von den gemessenen Strahlungsgrößen im charakteristischen Strahlungsfeld sind, an die Auswerteeinheit;
d)die Auswerteeinheit bestimmt in Abhängigkeit von den von dem Empfänger empfangenen Signale die erste relative Lage der Objekte zueinander;
e)eine relative Lageänderung der zwei Objekte wird zueinander herbeigeführt;
f)die Strahlungsquelle erzeugt in einer zweiten relativen Lage der Objekte zueinander das charakteristische Strahlungsfeld;
g)der Empfänger mißt die Strahlungsgrößen der Strahlung in der zweiten Lage;
h)der Empfänger überträgt die Signale, die abhängig von den gemessenen Strahlungsgrößen im charakteristischen Strahlungsfeld sind, an die Auswerteeinheit;
i)die Auswerteeinheit bestimmt in Abhängigkeit von den von dem Empfänger empfangenen Signalen die zweite relative Lage der Objekte zueinander;
j)in Abhängigkeit von der Steifigkeit der Verbindung der zwei Objekte wird die die Lageänderung verursachende Kraft und/oder das die Lageveränderung verursachende Moment berechnet.

Mit einer derartigen Ausgestaltung ist es möglich, mit nur einem Sensor eine mehrdimensionale Kraft- und/oder Momentenmessung durchzuführen.

Als vorteilhaft hinsichtlich der Produktionskosten hat sich herausgestellt, für die Strahlungsquelle LED-Elemente und/oder für den Empfänger Fototransistoren zu verwenden.

Die Anordnung der LED-Elemente und der Fototransistoren erfolgt vorzugsweise in zwei unterschiedlichen Formen. Dadurch reduziert sich der Rechenaufwand zur Ermittlung der relativen Lage bzw. der Kraft und/oder des Moments zwischen den zwei Objekten. Wird die relative Lage der zwei Objekte zueinander in kartesischen Koordinaten bestimmt, ist es zweckmäßig, die LED-Elemente und die Fototransistoren äquidistant rechtwinklig anzuordnen. Dies ist besonders für die Messung einer relativen Verschiebung der zwei Objekten zueinander entlang der Translationsrichtungen geeignet. Für die Lagebestimmung der zwei Objekte zueinander in Zylinderkoordinaten ist es vorteilhaft, die LED-Elemente kreisförmig und die Fototransistoren kreuzförmig anzuordnen.

Weiter ist es in einer Weiterbildung vorteilhaft, daß die Strahlungsquelle elektromagnetische Strahlung wie sichtbares Licht erzeugt. Der Empfänger mißt als physikalische Strahlungsgröße die Lichtintensität. Es können dann einfache und kostengünstige lichtempfindliche Standartfotorezeptoren eingesetzt werden.

In einer weiteren Ausgestaltung ist es vorgesehen, daß der Kraftsensor zur Bestimmung der Greifkraft und/oder des Greifmoments eines Greifers verwendet wird. Hinsichtlich der Genauigkeit der Messung der Greifkraft ist es vorteilhaft, jeweils mehrere Kraftsensoren nebeneinander auf aufeinander gerichteten Innenseiten eines Zweibackengreifers zu montieren. Die Auswerteeinheit ist bei dieser Ausgestaltung entsprechend eingerichtet, so daß
a)die Lage eines mit dem Greifer gegriffenen dritten Objekts
b)und die auf das dritte Objekt wirkende Greifkraft und/oder das auf das dritte Objekt wirkende Greifmoment
bestimmbar ist.

Verschiedene Ausführungsbeispiele der Erfindung sind in den Figuren 1 bis 6 dargestellt und werden im weiteren näher erläutert.

Es zeigen:
- Figur 1: Aufbau eines Lagesensors zur Ermittlung der relativen Lage zweier Objekte
- Figur 2: Funktionsprinzip des Lagesensors
- Figur 3: Verdeutlichung des Funktionsprinzips des Lagesensors an der Erkennung
a) einer relativen Verschiebung entlang der x-Achse
b) einer relativen Verschiebung entlang der z-Achse
c) einer Verdrehung um die y-Achse um den Winkel b
- Figur 4: Aufbau eines Lage-Kraft-Sensors
- Figur 5: Ermittlung der Greifkraft eines Zweibackengreifers
- Figur 6: Unwuchterkennung einer Waschmaschine
- Figur 7: Verwendung eines Kraft-Lage-Sensors zur Überlasterkennung
- Figur 8: Verwendung eines Kraft-Lage-Sensors als Bedienelement eines Notebooks
- Figur 9: Verwendung eines Kraft-Lage-Sensors als Meßsystem für die Beladung von Transportfahrzeugen, Staplern oder Aufzügen
- Figur 10: Verwendung eines Kraft-Lage-Sensors als Meßsystem für die Ergonomie

### 1. Aufbau und Funktionsprinzip eines Lagesensors

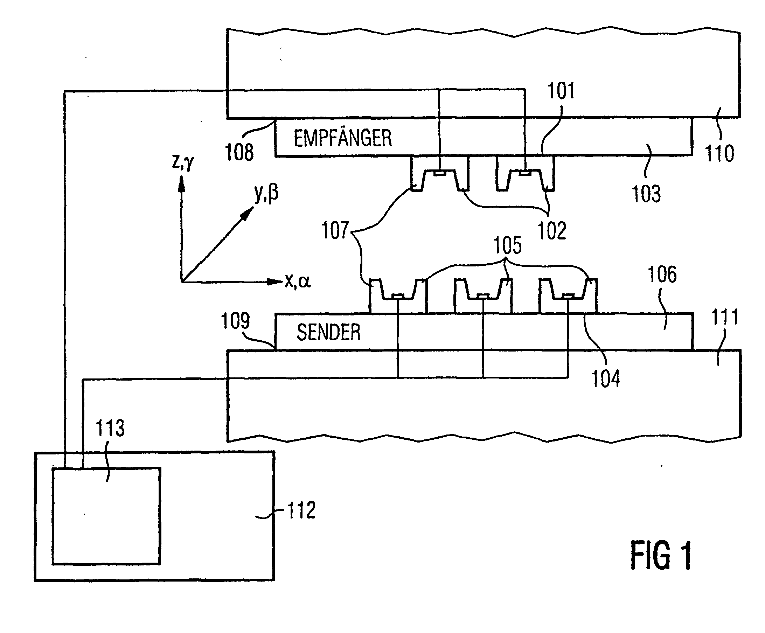

Figur 1 zeigt eine zweidimensionale Darstellung des Aufbaus eines Sensors zur Bestimmung der relativen Lage zweier Objekte zueinander. Der Lagesensor umfaßt zwei Teile:
- Ein Empfänger 101 ist mit 4 lichtempfindlichen Fototransistoren 102 bestückt. Diese sind rechtwinklig zueinander und äquidistant auf einer Platine 103 angeordnet.
- Ein Sender 104 ist mit 9 LED-Elementen 105 bestückt. Diese sind ebenfalls rechtwinklig zueinander und äquidistant auf einer Platine 106 angeordnet.

Die Anzahl der Fototransistoren und der LED-Elemente wird als Kompromiß zwischen Baugröße, Kosten und Genauigkeitsanforderungen gewählt. Die rechtwinklige und äquidistante Anordnung der Elemente ist sinnvoll, da dieser Lagesensor vor allem auf Messungen der Translationskomponenten (relative Verschiebungen entlang der x-, y- und z-Achse) abzielt.

Der Sender und der Empfänger sind zum Empfang aufeinander zugerichtet 107. Die Platinen werden auf der Rückseite 108 bzw. 109 bezüglich der LED-Elemente und Fototransistoren mit dem ersten und zweiten Objekt 110 bzw. 111 verbunden.

Der Sender und der Empfänger sind mit einer Auswerteeinheit 112, die durch einen frei programmierbaren Prozessor 113 realisiert ist, gekoppelt.

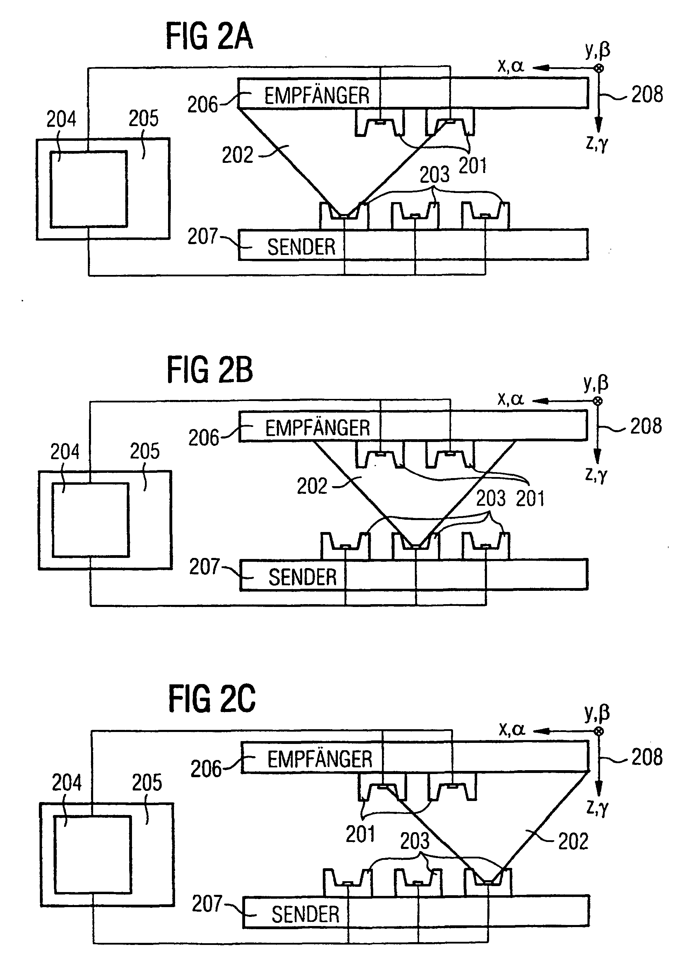

In den Figuren 2 bis 4 ist das Funktionsprinzip des Lagesensors dargestellt. Der Sender strahlt zeitlich versetzt (vgl. Fig. 2a, 2b und 2c) aus verschiedenen LED-Elementen 201 Licht mit bekannter Strahlungscharakteristik 202 ab. In jeder der in den Figuren 2 bis 4 dargestellten Strahlungssituationen wird die Lichtintensität an den Fototransistoren 203 gemessen. Die Lichtintensität wird an die Auswerteeinheit 204, die durch einen frei programmierbaren Prozessor 205 realisiert ist, übertragen. Der frei programmierbare Prozessor 205 ermittelt daraus die relative Lage des Empfängers 206 und Senders 207 zueinander. Für die relative Lageberechnung wird unter anderem die mit einem zunehmenden Abstand verbundene Intensitätsverringerung, die Richtcharakteristik der Sender- und Empfängerelemente 201,203 sowie die Mehrfachreflexion des Lichts zwischen Sender 207und Empfänger 206 berücksichtigt.

Der Sensor wird mit einer Abtastrate von 100Hz betrieben.

Als Ergebnis werden die x-, y- und z-Koordinaten des Senders relativ zum Empfänger 206 sowie die Verdrehungen des Senders 207 um die Winkel a,b und g relativ zum Empfänger 206 ausgegeben. Die Koordinaten und Drehwinkel beziehen sich auf ein im Empfänger liegendes Koordinatensystem 208.

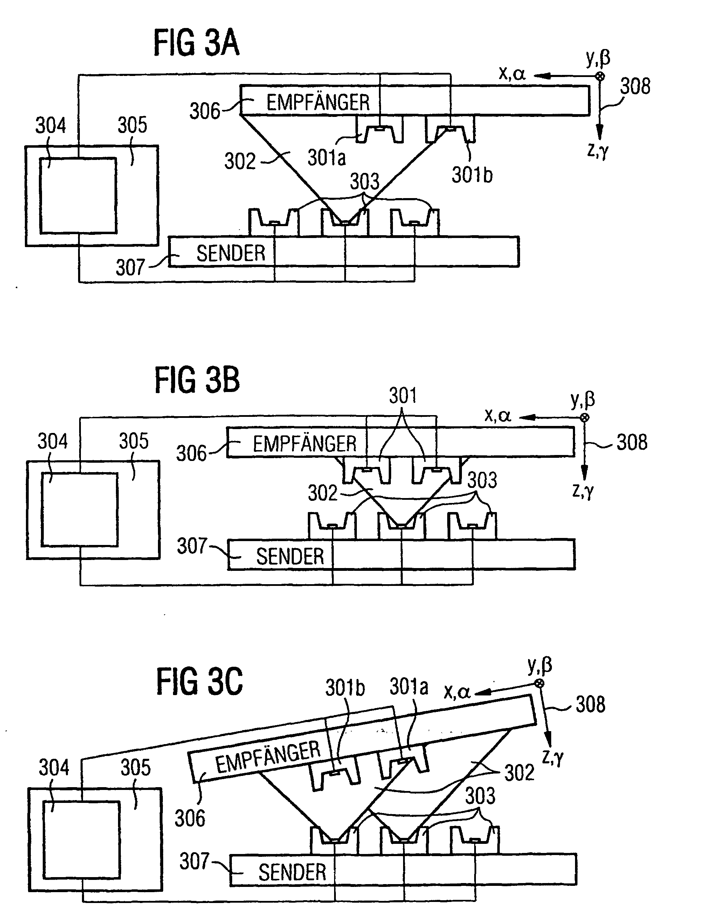

In Figur 3a) ist das Prinzip der Lageerkennung einer relativen Verschiebung des Senders 307 und des Empfängers 306 zueinander entlang der x-Achse dargestellt. Diese Verschiebung führt dazu, daß am Fototransistor 301a des Empfängers 306 eine geringere Lichtintensität 302 gemessen wird als in der vergleichbaren Anordnung in Figur 2b). Aus der Veränderung der Lichtintensitäten ermittelt der Prozessor 305 die Richtung und Größe der relativen Verschiebung.

Figur 3b) verdeutlicht die Lageerkennung einer relativen Verschiebung des Senders 307 gegenüber dem Empfänger 306 entlang der z-Achse. Gegenüber der in Figur 2b) dargestellten Strahlungssituation trifft Licht höherer Intensität auf die Fototransistoren 301, da der Abstand zwischen Sender 307und Empfänger 306 verringert wurde. Mehrfachreflexionen werden in einem größeren Umfang mitberücksichtigt. Aus der Veränderung der Lichtintensitäten ermittelt der Prozessor 305 die Richtung und Größe der relativen Verschiebung.

In Figur 3c) ist das Prinzip einer relativen Verdrehung des Senders 307 zum Empfänger 306 um die y-Achse um den Drehwinkel b dargestellt. Der in der Figur 3c) mit 301a bezeichnete Fototransistor hat einen größeren Abstand zum Sender 307 als der Fototransistor 301b und empfängt damit geringere Lichtintensitäten als der Fototransitor 301b. Der Abstand des Senders 307 zum Fototransistor 301b hat sich verringert, und somit empfängt der Fototransistor 301b Strahlung mit größerer Lichtintensität. Aus dem Vergleich der gemessenen Lichtintensitäten ermittelt der Prozessor 305 den Drehwinkel b.

### 2. Aufbau eines Lage-Kraft-Sensors eines Zweibackengreifers

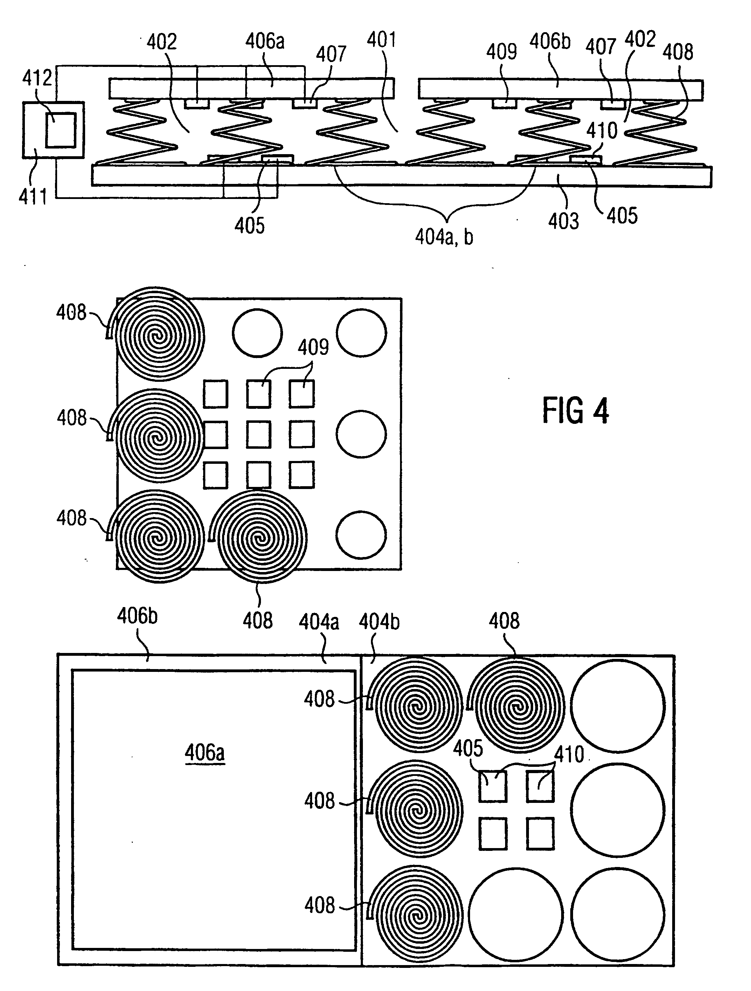

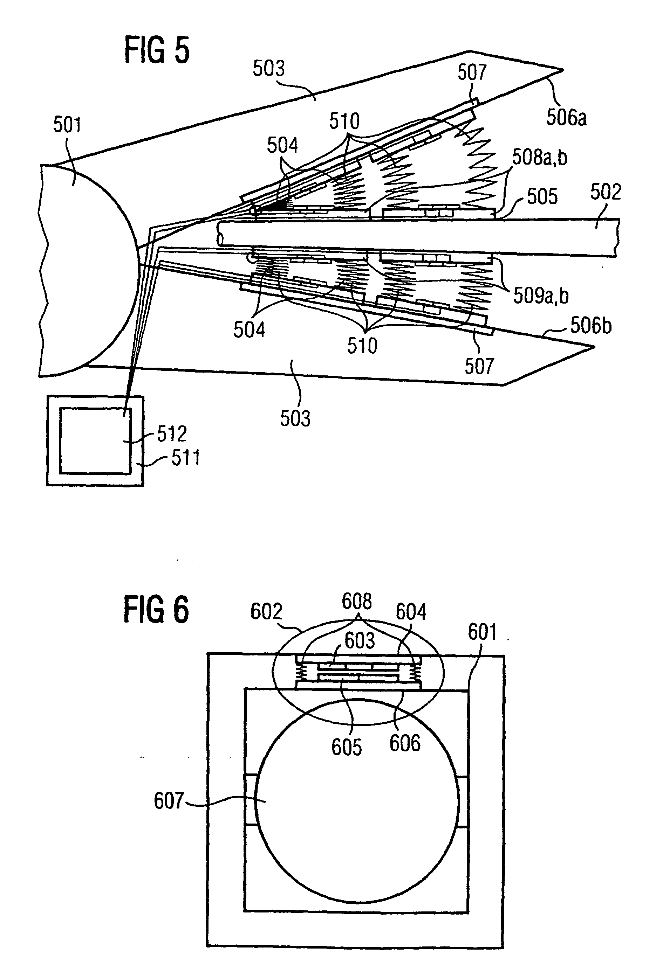

Ein zweites Ausführungsbeispiel ist in Figur 4 und 5 dargestellt und wird im weiteren näher erläutert.

Figur 4 zeigt eine Ausführung der Erfindung als Lage-Kraft-Sensor 401 bzw. 504, um eine Greifbewegung und die Stärke eines Zugriffs eines Zweibackengreifers 501 auf weiteres Objekt 502 zu regeln. Dabei ermittelt der Lage-Kraft-Sensor 401 bzw. 504 die relative Lage des Objekts 502 zwischen den beiden Backen 503 des Greifers (Figur 5). Zusätzlich liefert der Lage-Kraft-Sensor 401 bzw. 504 alle an einer Greiffläche 505 zwischen Sensor 401 bzw. 504 und Objekt 502 auftretenden Kräfte und Momente. Damit kann die Greifposition und die Zugriffsstärke während des Greifvorgangs ständig durch den Lage-Kraft-Sensor 401 bzw. 504 kontrolliert und durch den Lage-Kraft-Sensor 401 bzw. 504 korrigiert werden.

Für die Ausführung des Sensors als Lage-Kraft-Sensors 401 werden jeweils zwei Lagesensoren 402 entsprechend Ausführungsbeispiel 1 nebeneinander auf einer Grundplatte 403 angeordnet (Figur 4). Dazu sind die zwei Empfängerplatinen 404a,b, die die rechtwinklig äquidistant angeordneten Fototransistoren 405 tragen, in die Grundplatte 403 integriert. Die Größe der Grundplatte 403 beträgt 70mm x 30mm. Die Größe der zwei Senderplatinen 406a,b, die jeweils mit 9 rechtwinklig äquidistant angeordneten LED-Elemente 407 bestückt sind, beträgt 30mm x 30mm. Die beiden Senderplatinen 406a,b sind jeweils über vier Spiralfedern 408 bekannter Steifigkeit mit der Grundplatte 403 verbunden. Der Abstand zwischen Sender 409 und Empfänger 410 beträgt in der unbelasteten Anordnung 30mm.

Der Sender 409 und der Empfänger 410 sind mit einer Auswerteeinheit 411, die durch einen programmierbaren Prozessor 412 realisiert ist, gekoppelt. Der Lage-Kraft-Sensor 401 wird mit einer Abtastrate von 100Hz betrieben.

In Figur 5 ist dargestellt, daß jeweils eine dieser Anordnungen an der Backeninnenseite 506a,b einer Greiferbacke 503 angebracht wird. Dazu wird die Grundplatte 507 an der Greiferbacke 503 befestigt. Das gegriffene Objekt 502 liegt zwischen den Senderplatinen 508a,b bzw. 509a,b.

Greift der Zweibackengreifer 501 das Objekt 502, so bewirken die in dem Lage-Kraft-Sensor 504 enthaltenen Spiralfedern 510, daß sich die Greiferbacken 503 formschlüssig an das zu greifende Objekt 502 anlegen. Ein sicherer Griff mit großflächigem Reibungskontakt zwischen zu greifenden Objekt 502 und den Greiferbacken 503 wird somit möglich. Durch die Deformation der Federelemente 510 treten Positionsungenauigkeiten des gegriffenen Objekts 502 auf. Da jedoch die relative Lage des Objekts 502 zwischen den Backen 503 des Backengreifers 501 bestimmt und die Stärke und die Richtung der Deformation gemessen wird, kann die Auswerteeinheit 511 die Positionsungenauigkeit in der Greifbewegung kompensieren.

### 3. Weitere Ausführungsbeispiele des Lage-Kraft-Sensors

Im folgenden werden weitere Einsatzgebiete der Erfindung als Lage-Kraft-Sensor dargestellt.

### Unwuchterkennung einer Waschmaschine

Figur 6 zeigt eine Ausführung der Erfindung als Lage-Kraft-Sensor 602, in der der Sensor zur Unwuchterkennung in einer Waschmaschine 601 eingesetzt wird. Dazu ist der Sender 603 an der Innenseite des Gehäuses 604 der Waschmaschine 601 und der Empfänger 605 an der Außenseite des Gehäuses 606 der Waschmaschinentrommel 607 angebracht. Die Länge der Spiralfedern 608 ist entsprechend angepaßt. Damit werden sowohl die Größe und die Richtung als auch die Stärke der Bewegung der Waschmaschinentrommel 607 gemessen. Daraus wird auf das Auftreten einer Trommelunwucht und der Art und Größe der Unwucht geschlossen. Durch frühzeitiges Erkennen und Einleiten von Gegenmaßnahmen werden aus der Unwucht resultierende Abnutzungserscheinungen und Schäden frühzeitig behoben.

### Überlastungserkennung

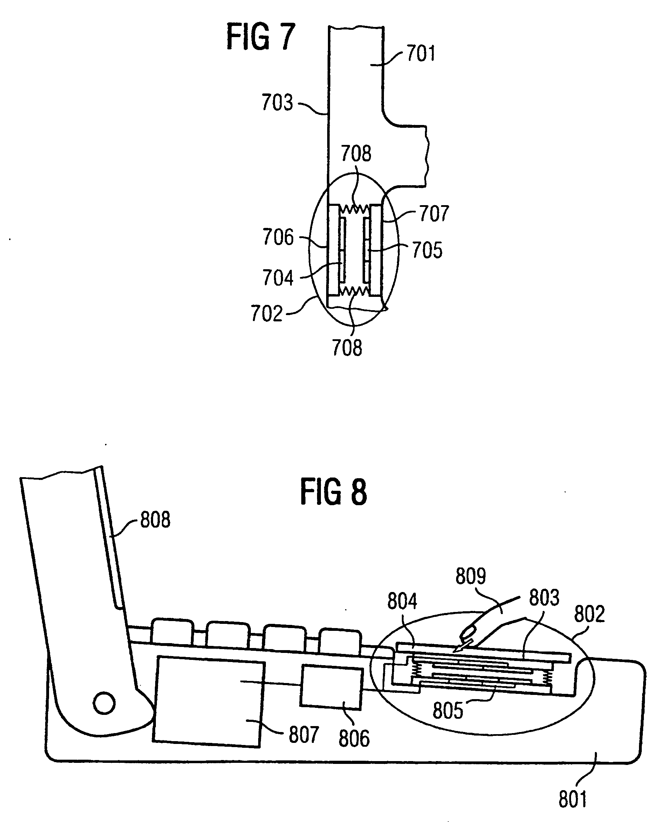

In der Ausführung der Erfindung als Lage-Kraft-Sensor 702 wird der Sensor auch zur Überlasterkennung im Betrieb einer Maschine 701, wie beispielsweise eines Haushaltsgeräts eingesetzt. Diese Ausführung der Erfindung ist in Figur 7 dargestellt. Dabei wird ausgenutzt, daß sich das Gehäuse 703 der Maschine 701 bei zu starker Belastung meßbar deformiert. Sender 704 und Empfänger 705 des Lage-Kraft-Sensors 702 werden an gegenüberliegenden Gehäuseteilen 706 bzw. 707 befestigt. Die Länge der Spiralfedern 708 ist entsprechend angepaßt.

Bei zu starker Belastung deformiert sich das Gehäuse 703 der Maschine 701. Der Lage-Kraft-Sensor 702 ermittelt die Richtung, die Größe und die die Deformation verursachende Kraft und/oder das die Deformation verursachende Moment. Die Belastungsgrößen werden im Betrieb der Maschine 701 ständig ermittelt. In Abhängigkeit von dem Ergebnis ergreift die Maschine 701 frühzeitig eine Gegenmaßnahme (z. B. sofortiges Abschalten, kurzzeitiges Rückwärtslaufen) und kann somit frühzeitig eine Schädigung verhindern.

### Maschinensteuerung durch Eingabe dreidimensionaler Bedienkomandos

Eine weitere Ausführung der Erfindung als Lage-Kraft-Sensor dient dazu, die Bedienung von Maschinen oder Geräten zu verbessern. In der Praxis werden viele Maschinen und Geräte über Handbedientastaturen gesteuert. Oftmals ist die Zuordnung von Betätigungsrichtung des Bedienelements zu einer bestimmten Ausführungsrichtung des Geräts oder der Maschine schwer. Eine Ursache dieser Kompatibilitätsprobleme liegt darin, daß mit einem zwei- oder eindimensionalen Bedienelement nicht alle durch die Maschine möglichen Freiheitsgrade gesteuert werden können. Es sind mehrere Bedienelemente für die Steuerung oder die Einschränkung der Funktionalität der Maschine notwendig. Durch die Möglichkeit des Lage-Kraft-Sensors, Richtung und Größe dreidimensionaler Kräfte und Momente zu messen, ist die Eingabe dreidimensionaler Bewegungskommandos möglich.

Ein derartiger Kraft-Lage-Sensor kann, wie in Figur 8 dargestellt, als verbessertes Eingabemittel für einen Computer verwendet werden.

### Touchpad für ein Notebook

Auf Grund von Platzmangel wird an einem Notebook 801 oftmals keine Maus verwendet. Da sich auch der Trackball als Bedienwerkzeug nicht richtig durchsetzt hat, werden zur Zeit zwei andere Lösungen eingesetzt. Das eine Hilfsmittel ist ein Touchpad. Das andere Bedienwerkzeug ist ähnlich einem analogen Miniaturjoystick gestaltet.

Der aus dem oben dargestellten Ausführungsbeispiel bekannte Lage-Kraft-Sensor 802 ist als Kombination beider Lösungen eingesetzt. Durch die Möglichkeit des Sensors 802, dreidimensionale Kräfte und Momente zu messen, ist ein dreidimensionales Bewegungskommando möglich. Dazu wird auf der Rückseite der Senderplatine 803 ein herkömmliches Touchpad 804 angebracht. Die mit dem Sender 802 und dem Empfänger 805 des Lage-Kraft-Sensors 802 gekoppelte Auswerteeinheit 806 wird mit dem Prozessor 807 des Notebooks 801 gekoppelt. Zusätzlich zur normalen Funktion des Touchpads 804 mißt der Kraft-Lage-Sensor 802 die Richtung und die Größe des Fingerdrucks 809 auf das Touchpad 804. Als weitere Bediengrößen werden vom Lage-Kraft-Sensor 802 das Kipp- und/oder das Torsionsmoment gemessen. Alle diese Bediengrößen werden als Steuergrößen für den Mauszeiger des Bildschirms 808 verwendet.

In dieser Ausführung der Erfindung ist der Lage-Kraft-Sensor auch für CAD-Softwareanwendungen an einem stationären Computer vorteilhaft.

### Meßsystem für die Beladung von Transportfahrzeugen, Staplern oder Aufzügen

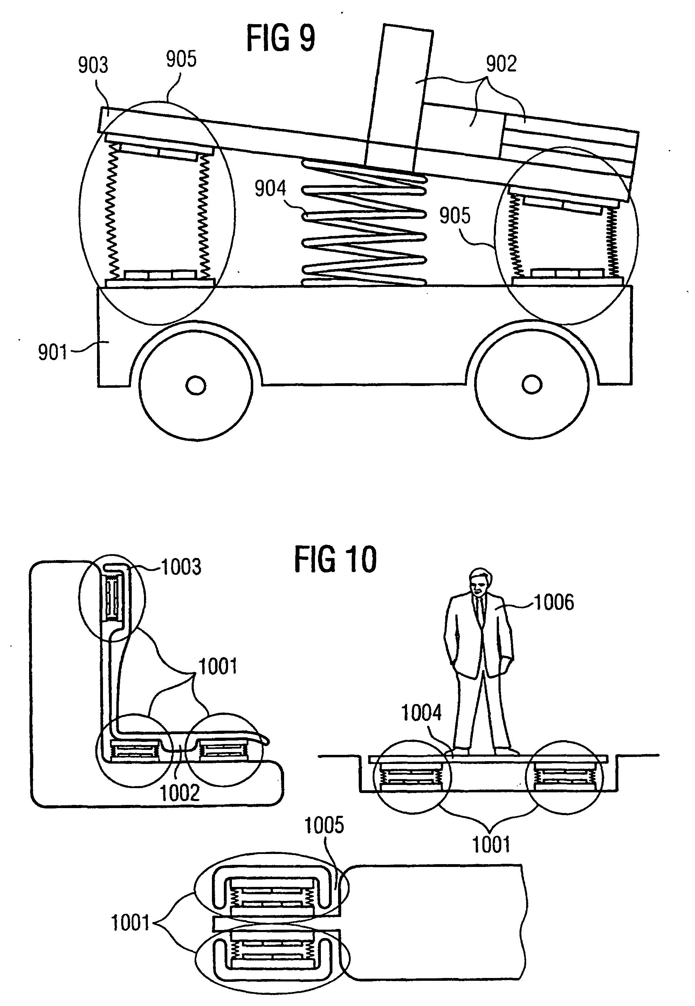

Eine weitere Ausführung der Erfindung als Lage-Kraft-Sensor ist in Figur 9 dargestellt.

Ein automatisch oder manuell gesteuertes Transportfahrzeug 901 wird teilweise mit einer großen Menge Transportgut 902 beladen. Um die Sicherheit eines solchen Fahrzeugs zu erhöhen, ist die Beladeplattform 903 federnd 904 aufgehängt. Mechanisch ist die Federung 904 so ausgelegt, daß bei Vollbeladung ein geringer Restfederweg übrigbleibt und eine Überlastung ausgeschlossen wird. Mehrere Lage-Kraft-Sensoren 905 werden an den Ecken der Beladeplattform 903 eingebaut. Somit kann ständig die Gesamtlast der Beladung 902 und die Lastverteilung auf der Beladungsfläche 903 gemessen und bei automatischer Beladung kontrolliert und gesteuert werden. Während der Fahrt des Transportfahrzeugs 901 wird über die Messung der Querkräfte durch die Lage-Kraft-Sensoren 905 die aktuelle Kurvengeschwindigkeit kontrolliert. Insbesondere bei einem automatischen Transportsystem wird damit die zulässige Transportgeschwindigkeit der aktuellen Beladungsmenge 902 angepaßt.

### Meßsystem für Ergonomiezwecke

In weiteren Ausführungen wird die Erfindung als Lage-Kraft-Sensor als Meßwerkzeug im Bereich der Ergonomie verwendet. Mehrere Lage-Kraft-Sensoren 1001 entsprechend dem Ausführungsbeispiel 4 sind an einer Sitz- 1002 und Lehnenfläche 1003, auf einem Boden 1004 oder in einem Handgriff 1005 angebracht. Damit wird untersucht, wie eine Person 1006 Drücke und Kräfte auf die Sitz- 1002 und Lehnenfläche 1003, auf den Boden 1004 oder den Handgriff 1005 ausüben. Die Auswertung kann medizinisch interpretiert und zur verbesserten ergonomischen Gestaltung des Produkts genutzt werden. Im Gegensatz zu herkömmlichen Methoden, die nur die eindimensionale Druckverteilung an der Oberfläche messen können, ermöglicht der Lage-Kraft-Sensor 1001 einen genaueren Aufschluß über die Größe und Richtung einer mehrdimensionalen Kontaktkraft.

Im folgenden werden einige Varianten zu den oben beschriebenen Ausführungsbeispielen angegeben:

Für die Messung der relativen Lage zweier Objekte zueinander in Zylinderkoordinaten werden die LED-Elemente kreisförmig auf der Senderplatine aufgebracht. Die Fototransitoren sind kreuzförmig auf der Empfängerplatine angeordnet.

In einer Variante der Erfindung ist es vorgesehen, ein flächiges taktiles Sensorelement an der Kontaktfläche 505 zwischen dem Lage-Kraft-Sensor 504 und dem Objekt 502 anzubringen. Dieses Element mißt die Druckverteilung über der Kontaktfläche 505.

Ferner ist es in einer weiteren Variante der Erfindung vorgesehen, bei der Überlasterkennung im Betrieb einer Maschine 701 die Spiralfedern 708 des Lage-Kraft-Sensors 702 wegzulassen. Der Lage-Kraft-Sensor 702 arbeitet als Lage-Sensor. Überschreitet eine gemessene relative Lageänderung bei einer Deformation des Gehäuses 703 der Maschine 701 eine vorgegebene relative Lageänderung, ergreift die Maschine 701 frühzeitig eine Gegenmaßnahme (z. B. sofortiges Abschalten, kurzzeitiges Rückwärtslaufen) und kann somit frühzeitig eine Schädigung verhindern.

Im Rahmen dieses Dokuments wurden folgende Veröffentlichungen zitiert:
[1] B. Magnussen, Infrastruktur für Steuerungs- und Regelungssysteme von robotischen Miniatur- und Mikrogreifern, Fortschrittberichte VDI, Reihe 8, Nr.567, S. 68.78, VDI Verlag GmbH, Düsseldorf, 1996
[2] R. Bauer, Integriertes hierarchisches Navigationssystem für autonome mobile Roboter, S. 17-23, S. 35-41, Dissertation Universität Linz, 1997

## Patentansprüche

1. Anordnung zur Ermittlung einer relativen Lage zweier Objekte zueinander, die
a) eine Strahlungsquelle, die so eingerichtet ist, daß sie Strahlung mit einem charakteristischen Strahlungsfeld erzeugt, bei welchem charakteristischen Strahlungfeld an jedem Punkt in dem charakteristischen Strahlungsfeld die Strahlung bekannte Strahlungsgrößen besitzt, wobei aus den bekannten Strahlungsgrößen eindeutig der jeweilige Punkt ermittelt werden kann,
b)einen Empfänger, der für den Empfang der Strahlung eingerichtet ist
c) und eine mit dem Empfänger gekoppelte Auswerteeinheit, mit der aus von dem Empfänger empfangenen Signalen, die abhängig vom Empfangsort im charakteristischen Strahlungsfeld sind, die relative Lage der Objekte zueinander bestimmbar ist,
umfaßt.

2. Anordnung nach Anspruch 1, bei der das erste Objekt die Strahlungsquelle und das zweite Objekt den Empfänger trägt.

3. Anordnung nach Anspruch 1, bei der das erste Objekt die Strahlungsquelle und den Empfänger trägt, und das zweite Objekt mit einem Reflektor zur Reflexion der Strahlung ausgestattet ist.

4. Anordnung nach einem der Ansprüche 1 bis 3, bei der das charakteristische Strahlungsfeld ein unsymmetrisches Strahlungsfeld ist.

5. Anordnung nach einem der Ansprüche 1 bis 4, bei der die zwei Objekte durch eine elastische Verbindung vorgegebener Steifigkeit verbunden sind.

6. Anordnung nach Anspruch 5, bei der die elastische Verbindung mindestens eine der folgenden Verbindungen aufweist:
a) mindestens ein Federelement,
b) Silikon,
c) Schaumstoff.

7. Anordnung nach einem der Ansprüche 1 bis 6, bei der die mit dem Empfänger gekoppelte Auswerteeinheit so eingerichtet ist, daß aus den von dem Empfänger empfangenen Signalen in Abhängigkeit von der Steifigkeit der Verbindung eine zwischen den Objekten wirkende Kraft bestimmbar ist.

8. Anordnung nach einem der Ansprüche 1 bis 7, bei der die mit dem Empfänger gekoppelte Auswerteeinheit so eingerichtet ist, daß aus den von dem Empfänger empfangenen Signalen in Abhängigkeit von der Steifigkeit der Verbindung ein zwischen den Objekten wirkendes Moment bestimmbar ist.

9. Anordnung nach einem der Ansprüche 1 bis 8, bei der die Strahlungsquelle mindestens ein LED-Element ist.

10. Anordnung nach Anspruch 9, bei der die Strahlungsquelle mehrere LED-Elemente sind.

11. Anordnung nach einem der Ansprüche 1 bis 10, bei der der Empfänger mehrere Fototransistoren aufweist.

12. Anordnung nach den Ansprüche 10 und 11, bei der
a)die LED-Elemente äquidistant angeordnet sind,
b)und der Empfänger mit äquidistant angeordneten Fototransistoren bestückt ist.

13. Anordnung nach Anspruch 12, bei der
a)mindestens drei LED-Elemente rechtwinklig angeordnet sind,
b)und der Empfänger mit mindestens drei rechtwinklig angeordneten Fototransistoren bestückt ist.

14. Anordnung nach einem der Ansprüche 1 bis 11, bei der
a)viele LED-Elemente kreisförmig angeordnet sind,
b)und der Empfänger mit vielen kreuzförmig angeordneten Fototransistoren bestückt ist.

15. Anordnung nach einem der Ansprüche 1 bis 14, bei der der Empfänger so eingerichtet ist, daß die Lichtintensität gemessen wird.

16. Satz mit mehreren Anordnungen zur Ermittlung einer relativen Lage zweier Objekte zueinander, bei dem jede Anordnung
a) eine Strahlungsquelle, die so eingerichtet ist, daß sie Strahlung mit einem charakteristischen Strahlungsfeld erzeugt, bei welchem charakteristischen Strahlungfeld an jedem Punkt in dem charakteristischen Strahlungsfeld die Strahlung bekannte Strahlungsgrößen besitzt, wobei aus den bekannten Strahlungsgrößen eindeutig der jeweilige Punkt ermittelt werden kann, und
b) einen Empfänger, der für den Empfang der Strahlung eingerichtet ist,
umfaßt, und
bei dem mit mindestens einer mit den Empfängern gekoppelten Auswerteeinheit, mit der aus jeweils von einem Empfänger empfangenen Signalen, die jeweils abhängig vom Empfangsort im charakteristischen Strahlungsfeld sind, die relative Lage der Objekte zueinander bestimmbar ist.

17. Satz mit mehreren Anordnungen nach Anspruch 16, bei dem jede Anordnung derart eingerichtet ist, daß die zwei Objekte durch eine elastische Verbindung vorgegebener Steifigkeit verbunden sind, und bei dem die Auswerteeinheit derart eingerichtet ist, daß aus den von dem Empfänger empfangenen Signalen in Abhängigkeit von den Steifigkeiten der Verbindungen eine zwischen den Objekten wirkende Kraft bestimmbar ist.

18. Satz mit mehreren Anordnungen nach Anspruch 16, bei dem jede Anordnung derart eingerichtet ist, daß die zwei Objekte durch eine elastische Verbindung vorgegebener Steifigkeit verbunden sind, und bei dem die Auswerteeinheit derart eingerichtet ist, daß aus den von den Empfängern empfangenen Signalen in Abhängigkeit von den Steifigkeiten der Verbindungen ein zwischen den Objekten wirkendes Moment bestimmbar ist.

19. Satz mit mehreren Anordnungen nach Anspruch 17, bei dem jeweils mehrere Anordnungen nebeneinander auf aufeinander gerichteten Innenseiten von Backen eines Zweibackengreifers montiert sind, und die Auswerteeinheit so eingerichtet ist,
a) daß die Lage eines mit dem Greifer gegriffenen dritten Objekts
b) und die auf das dritte Objekt wirkende Greifkraft bestimmbar ist.

20. Satz mit mehreren Anordnungen nach Anspruch 18, bei dem jeweils mehrere Anordnungen nebeneinander auf aufeinander gerichteten Innenseiten von Backen eines Zweibackengreifers montiert sind, und die Auswerteeinheit so eingerichtet ist,
a) daß die Lage eines mit dem Greifer gegriffenen dritten Objekts
b) und die auf das dritte Objekt wirkendes Greifmoment bestimmbar ist.

21. Verfahren zur Ermittlung einer relativen Lage zweier Objekte zueinander mittels einer Strahlungsquelle, einem Empfänger und einer mit dem Empfänger gekoppelten Auswerteeinheit, bei dem
a) die Strahlungsquelle Strahlung mit einem charakteristischen Strahlungsfeld erzeugt, bei welchem charakteristischen Strahlungfeld an jedem Punkt in dem charakteristischen Strahlungsfeld die Strahlung bekannte Strahlungsgrößen besitzt, wobei aus den bekannten Strahlungsgrößen eindeutig der jeweilige Punkt ermittelt werden kann,
b) der Empfänger zu messende Strahlungsgrößen der Strahlung mißt;
c) der Empfänger Signale, die abhängig von den gemessenen Strahlungsgrößen im charakteristischen Strahlungsfeld sind, an die Auswerteeinheit überträgt;
d) die Auswerteeinheit in Abhängigkeit von den von dem Empfänger empfangenen Signalen die relative Lage der Objekte zueinander bestimmt.

22. Verfahren nach Anspruch 21, bei dem die zwei Objekte der Anordnung mit einer elastischen Verbindung vorgegebener Steifigkeit verbunden werden, und bei dem die Auswerteeinheit aus einer relativen Lageänderung der zwei Objekte zueinander in Abhängigkeit von der Steifigkeit der Verbindung der zwei Objekte die zwischen den Objekten wirkende Kraft bestimmt.

23. Verfahren nach Anspruch 21 oder 22, bei dem die zwei Objekte der Anordnung mit einer elastischen Verbindung vorgegebener Steifigkeit verbunden werden, und bei dem die Auswerteeinheit aus einer relativen Lageänderung der zwei Objekte zueinander in Abhängigkeit von der Steifigkeit der Verbindung der zwei Objekte das zwischen den Objekten wirkende Moment bestimmt.

24. Verfahren nach einem der Ansprüche 22 oder 23, bei dem
a)die Strahlungsquelle in einer ersten relativen Lage der Objekte zueinander das charakteristisches Strahlungsfeld erzeugt;
b) der Empfänger die Strahlungsgrößen der Strahlung in der ersten Lage mißt;
c) der Empfänger die Signale, die abhängig von den gemessenen Strahlungsgrößen im charakteristischen Strahlungsfeld sind, an die Auswerteeinheit überträgt;
d)die Auswerteeinheit in Abhängigkeit von den von dem Empfänger empfangenen Signalen die erste relative Lage der Objekte zueinander bestimmt;
e)eine relative Lageänderung der zwei Objekte zueinander herbeigeführt wird;
f)die Strahlungsquelle in einer zweiten relativen Lage der Objekte zueinander das charakteristische Strahlungsfeld erzeugt;
g)der Empfänger die Strahlungsgrößen der Strahlung in der zweiten Lage mißt;
h)der Empfänger die Signale, die abhängig von den gemessenen Strahlungsgrößen im charakteristischen Strahlungsfeld sind, an die Auswerteeinheit überträgt;
i)die Auswerteeinheit in Abhängigkeit von den von dem Empfänger empfangenen Signalen die zweite relative Lage der Objekte zueinander bestimmt;
j)in Abhängigkeit von der Steifigkeit der Verbindung der zwei Objekte die die Lageänderung verursachende Kraft berechnet wird.

25. Verfahren nach einem der Ansprüche 22 bis 23, das nach folgenden Schritten abläuft:
a)die Strahlungsquelle in einer ersten relativen Lage der Objekte zueinander das charakteristisches Strahlungsfeld erzeugt;
b)der Empfänger die Strahlungsgrößen der Strahlung in der ersten Lage mißt;
c)der Empfänger die Signale, die abhängig von den gemessenen Strahlungsgrößen im charakteristischen Strahlungsfeld sind, an die Auswerteeinheit überträgt;
d)die Auswerteeinheit in Abhängigkeit von den von dem Empfänger empfangenen Signalen die erste relative Lage der Objekte zueinander bestimmt;
e)eine relative Lageänderung der zwei Objekte zueinander herbeigeführt wird;
f)die Strahlungsquelle in einer zweiten relativen Lage der Objekte zueinander das charakteristische Strahlungsfeld erzeugt;
g)der Empfänger die Strahlungsgrößen der Strahlung in der zweiten Lage mißt;
h)der Empfänger die Signale, die abhängig von den gemessenen Strahlungsgrößen im charakteristischen Strahlungsfeld sind, an die Auswerteeinheit überträgt;
i)die Auswerteeinheit in Abhängigkeit von den von dem Empfänger empfangenen Signalen die zweite relative Lage der Objekte zueinander bestimmt;
j)in Abhängigkeit von der Steifigkeit der Verbindung der zwei Objekte das die Lageänderung verursachende Moment berechnet wird.

## Claims

1. Arrangement for determining a relative position of two objects with regard to one another that includes
a) a radiation source that is designed in such a way that it generates radiation with a characteristic radiation field for which characteristic radiation field at each point in the characteristic radiation field, the radiation has known radiation variables, in which case the relevant point can be uniquely determined from the known radiation variables,
b) a receiver that is designed for receiving the radiation
c) and an evaluation unit connected to the receiver by means of which the relative position of the objects with regard to one another can be determined from signals received by the receiver, said signals depending on the receiving location in the characteristic radiation field.

2. Arrangement according to claim 1, in which the first object carries the radiation source and the second object the receiver.

3. Arrangement according to claim 1, in which the first object carries the radiation source and the receiver and the second object is equipped with a reflector for reflecting the radiation.

4. Arrangement according to one of the claims 1 to 3, in which the characteristic radiation field is an unsymmetrical radiation field.

5. Arrangement according to one of the claims 1 to 4, in which the two objects are connected by using an elastic connection which exhibits a predetermined rigidity.

6. Arrangement according to claim 5, in which the elastic connection has at least one of the following connections:
a)at least one spring element,
b)silicon,
c)foam.

7. Arrangement according to one of the claims 1 to 6, in which the evaluation unit connected to the receiver is designed in such a way that from the signals received by the receiver, said signals depending on the rigidity of the connection, a force acting between the objects can be determined.

8. Arrangement according to one of the claims 1 to 7, in which the evaluation unit connected to the receiver is designed in such a way that from the signals received by the receiver, said signals depending on the rigidity of the connection, a moment acting between the objects can be determined.

9. Arrangement according to one of the claims 1 to 8, in which the radiation source is at least one LED element.

10. Arrangement according to claim 9, in which the radiation source consists of several LED elements.

11. Arrangement according to one of the claims 1 to 10, in which the receiver has several photo transistors.

12. Arrangement according to claims 10 and 11, in which
a)the LED elements are arranged equidistantly to one another,
b)and the receiver is equipped with photo transistors arranged equidistantly to one another.

13. Arrangement according to claim 12, in which
a)at least three LED elements are arranged at right angles to one another,
b)and the receiver is equipped with at least three photo transistors arranged at right angles to one another.

14. Arrangement according to one of the claims 1 to 11, in which
a)many LED elements are arranged in a circle,
b)and the receiver is equipped with many photo transmitters arranged in a cross.

15. Arrangement according to one of the claims 1 to 14, in which the receiver is designed in such a way that the light intensity is measured.

16. Set with a number of arrangements for determining a relative position of two objects with regard to one another, in which each arrangement includes
a)a radiation source that is designed in such a way that it generates radiation with a characteristic radiation field, for which characteristic radiation field, at each point in the characteristic radiation field, the radiation has well-known radiation variables in which case the specific point can be uniquely determined from the known radiation variables, and
b)a receiver that is designed for receiving the radiation,
and
in which with at least one of the evaluation units connected to the receiver, the relative position of the objects with regard to one another can be determined in each case from signals received by the receiver, said signals depending on the receiving location in the characteristic radiation field in each case.

17. Set with a number of arrangements according to claim 16, in which each arrangement is designed in such a way that the two objects are connected by using an elastic connection which exhibits a predetermined rigidity and in which the evaluation unit connected to the receiver is designed in such a way that from the signals received by the receiver, said signals depending on the rigidity of the connection, a force acting between the objects can be determined.

18. Set with a number of arrangements according to claim 16, in which each arrangement is designed in such a way that the two objects are connected by using an elastic connection which exhibits a predetermined rigidity and in which the evaluation unit connected to the receiver is designed in such a way that from the signals received by the receiver, said signals depending on the rigidity of the connection, a moment acting between the objects can be determined.

19. Set with a number of arrangements according to claim 17, in which several force sensors are fitted next to one another facing inwards on the inside faces of a two-jaw gripping device and the evaluation unit is designed in such a way that,
a)the position of a third object gripped with the gripping device
b)and the gripping force acting on the third object can be determined.

20. Set with a number of arrangements according to claim 18, in which several force sensors are fitted next to one another facing the insides of a two-jaw gripping device and the evaluation unit is designed in such a way that,
a)the position of a third object gripped with the gripping device
b)and the gripping moment acting on the third object can be determined.

21. Method for determining a relative position of two objects with regard to one another by means of a radiation source, a receiver and an evaluation unit connected to the receiver, in which
a)the radiation source generates radiation with a characteristic radiation field for which characteristic radiation field at each point in the characteristic radiation field, the radiation has well-known radiation variables in which case the specific point can be uniquely determined from the known radiation variables,
b)the receiver measures the radiation variables of the radiation to be measured;
c)the receiver transmits signals, said signals depending on the measured radiation variables in the characteristic radiation field, to the evaluation unit;
d)the evaluation unit determines the relative position of objects to one another depending on the signals received by the receiver.

22. Method according to claim 21, in which the two objects of the device are connected by using an elastic connection which exhibits a predetermined rigidity and in which the evaluation unit connected to the receiver is designed in such a way that from the signals received by the receiver, said signals depending on the rigidity of the connection, a force acting between the objects can be determined.

23. Method according to claim 21 or 22, in which the two objects of the device are connected by using an elastic connection which exhibits a predetermined rigidity and in which the evaluation unit connected to the receiver is designed in such a way that from the signals received by the receiver, said signals depending on the rigidity of the connection, a moment acting between the objects can be determined.

24. Method according to one of the claims 22 or 23, in which
a) the radiation source generates the characteristic radiation field in a first relative position of the objects with regard to one another;
b) the receiver measures the radiation variables of the radiation in the first position;
c) the receiver transmits signals, said signals depending on the measured radiation variables in the characteristic radiation field, to the evaluation unit;
d) the evaluation unit determines the first relative position of the objects with regard to one another according to the signals received by the receiver;
e) a relative position of two objects to one another is changed;
f) the radiation source generates the characteristic radiation field in a second relative position of the objects to one another;
g) the receiver measures the radiation variables of the radiation in the second position;
h) the receiver transmits the signals, said signals depending on the measured radiation variables in the characteristic radiation field, to the evaluation unit;
i) the evaluation unit determines the second relative position of the objects to one another according to the signals received by the receiver;
j) according to the rigidity of the connection of the two objects, the force causing the change of position is calculated.

25. Method according to one of the claims 22 to 23 that proceeds according to one of the following steps:
a) the radiation source generates the characteristic radiation field in a first relative position of the objects with regard to one another;
b) the receiver measures the radiation variables of the radiation in the first position;
c) the receiver transmits signals, said signals depending on the measured radiation variables in the characteristic radiation field, to the evaluation unit;
d) the evaluation unit determines the first relative position of the objects with regard to one another according to the signals received by the receiver;
e) a relative position of two objects with regard to one another is changed;
f) the radiation source generates the characteristic radiation field in a second relative position of the objects with regard to one another;
g) the receiver measures the radiation variables of the radiation in the second position;
h) the receiver transmits the signals, said signals depending on the measured radiation variables in the characteristic radiation field, to the evaluation unit;
i) the evaluation unit determines the second relative position of the objects with regard to one another according to the signals received by the receiver;
j) according to the rigidity of the connection of the two objects, the moment changing the position is calculated.

## Revendications

1. Dispositif pour la détermination d'une position relative de deux objets l'un par rapport à l'autre, lequel comprend:
a) une source de rayonnement, laquelle est aménagée de manière telle qu'elle produit un rayonnement avec un champ de rayonnement caractéristique dans lequel le rayonnement possède des grandeurs de rayonnement connues en chaque point du champ de rayonnement caractéristique, le point respectif pouvant être déterminé univoquement au départ des grandeurs de rayonnement connues;
b) un récepteur aménagé pour la réception du rayonnement et
c) une unité d'évaluation couplée au récepteur, laquelle permet de déterminer la position relative des objets l'un par rapport à l'autre au départ de signaux reçus par le récepteur, lesquels dépendent de l'endroit de la réception dans le champ de rayonnement caractéristique.

2. Dispositif selon la revendication 1, dans lequel le premier objet porte la source de rayonnement et le deuxième objet porte le récepteur.

3. Dispositif selon la revendication 1, dans lequel le premier objet porte la source de rayonnement et le récepteur et le deuxième objet est équipé d'un réflecteur pour la réflexion du rayonnement.

4. Dispositif selon l'une des revendications 1 à 3, dans lequel le champ de rayonnement caractéristique est un champ de rayonnement asymétrique.

5. Dispositif selon l'une des revendications 1 à 4, dans lequel les deux objets sont reliés par un assemblage élastique de rigidité donnée.

6. Dispositif selon la revendication 5, dans lequel l'assemblage élastique comporte au moins l'un des assemblages suivants:
a) au moins un élément de ressort;
b) du silicone;
c) un produit alvéolaire.

7. Dispositif selon l'une des revendications 1 à 6, dans lequel l'unité d'évaluation couplée au récepteur est aménagée de manière telle qu'une force agissant entre les objets peut être déterminée en fonction de la rigidité de l'assemblage au départ des signaux reçus par le récepteur.

8. Dispositif selon l'une des revendications 1 à 7, dans lequel l'unité d'évaluation couplée au récepteur est aménagée de manière telle qu'un couple agissant entre les objets peut être déterminé en fonction de la rigidité de l'assemblage au départ des signaux reçus par le récepteur.

9. Dispositif selon l'une des revendications 1 à 8, dans lequel la source de rayonnement est au moins un élément LED.

10. Dispositif selon la revendication 9, dans lequel la source de rayonnement est plusieurs éléments LED.

11. Dispositif selon l'une des revendications 1 à 10, dans lequel le récepteur comporte plusieurs phototransistors.

12. Dispositif selon les revendications 10 et 11, dans lequel
a) les éléments LED sont disposés de manière équidistante et
b) le récepteur est équipé de phototransistors disposés de manière équidistante.

13. Dispositif selon la revendication 12, dans lequel
a) au moins trois éléments LED sont placés à angle droit et
b) le récepteur est équipé d'au moins trois phototransistors placés à angle droit.

14. Dispositif selon l'une des revendications 1 à 11, dans lequel
a) de nombreux éléments LED sont disposés en cercle et
b) le récepteur est équipé de nombreux phototransistors disposés en croix.

15. Dispositif selon l'une des revendications 1 à 14, dans lequel le récepteur est aménagé de manière telle que l'intensité lumineuse est mesurée.

16. Ensemble de plusieurs dispositifs pour la détermination d'une position relative de deux objets l'un par rapport à l'autre, dans lequel chaque dispositif comporte
a) une source de rayonnement, laquelle est aménagée de manière telle qu'elle produit un rayonnement avec un champ de rayonnement caractéristique dans lequel le rayonnement possède des grandeurs de rayonnement connues en chaque point du champ de rayonnement caractéristique, le point respectif pouvant être déterminé univoquement au départ des grandeurs de rayonnement connues et
b) un récepteur aménagé pour la réception du rayonnement
et dans lequel au moins une unité d'évaluation couplée aux récepteurs permet de déterminer la position relative des objets l'un par rapport à l'autre au départ de signaux respectivement reçus par un récepteur, lesquels dépendent respectivement de l'endroit de la réception dans le champ de rayonnement caractéristique.

17. Ensemble de plusieurs dispositifs selon la revendication 16, dans lequel chaque dispositif est aménagé de manière telle que les deux objets sont reliés par un assemblage élastique de rigidité donnée et dans lequel l'unité d'évaluation est aménagée de manière telle qu'une force agissant entre les objets peut être déterminée en fonction des rigidités des assemblages au départ des signaux reçus par le récepteur.

18. Ensemble de plusieurs dispositifs selon la revendication 16, dans lequel chaque dispositif est aménagé de manière telle que les deux objets sont reliés par un assemblage élastique de rigidité donnée et dans lequel l'unité d'évaluation est aménagée de manière telle qu'un couple agissant entre les objets peut être déterminé en fonction des rigidités des assemblages au départ des signaux reçus par les récepteurs.

19. Ensemble de plusieurs dispositifs selon la revendication 17, dans lequel respectivement plusieurs dispositifs sont montés côte à côte sur des faces intérieures, tournées l'une vers l'autre, de mâchoires d'un préhenseur à deux mâchoires, et l'unité d'évaluation est aménagée de manière telle que
a) la position d'un troisième objet pris par le préhenseur et
b) la force de préhension agissant sur le troisième objet sont déterminables.

20. Ensemble de plusieurs dispositifs selon la revendication 18, dans lequel respectivement plusieurs dispositifs sont montés côte à côte sur des faces intérieures, tournées l'une vers l'autre, de mâchoires d'un préhenseur à deux mâchoires, et l'unité d'évaluation est aménagée de manière telle que
a) la position d'un troisième objet pris par le préhenseur et
b) le couple de préhension agissant sur le troisième objet sont déterminables.

21. Procédé pour la détermination d'une position relative de deux objets l'un par rapport à l'autre au moyen d'une source de rayonnement, d'un récepteur et d'une unité d'évaluation couplée au récepteur, dans lequel
a) la source de rayonnement produit un rayonnement avec un champ de rayonnement caractéristique dans lequel le rayonnement possède des grandeurs de rayonnement connues en chaque point du champ de rayonnement caractéristique, le point respectif pouvant être déterminé univoquement au départ des grandeurs de rayonnement connues;
b) le récepteur mesure des grandeurs de rayonnement du rayonnement qui sont à mesurer;
c) le récepteur transmet à l'unité d'évaluation des signaux qui dépendent des grandeurs mesurées du rayonnement dans le champ de rayonnement caractéristique;
d) l'unité d'évaluation détermine la position relative des objets l'un par rapport à l'autre en fonction des signaux reçus par le récepteur.

22. Procédé selon la revendication 21, dans lequel on relie les deux objets du dispositif par un assemblage élastique de rigidité donnée et dans lequel l'unité d'évaluation détermine la force agissant entre les objets en fonction de la rigidité de l'assemblage des deux objets au départ d'une modification de la position relative des deux objets l'un par rapport à l'autre.

23. Procédé selon la revendication 21 ou 22, dans lequel les deux objets du dispositif sont reliés par un assemblage élastique de rigidité donnée et dans lequel l'unité d'évaluation détermine le couple agissant entre les objets en fonction de la rigidité de l'assemblage des deux objets au départ d'une modification de la position relative des deux objets l'un par rapport à l'autre.

24. Procédé selon l'une des revendications 22 ou 23, dans lequel
a) dans une première position relative des objets l'un par rapport à l'autre, la source de rayonnement produit le champ de rayonnement caractéristique;
b) le récepteur mesure les grandeurs de rayonnement du rayonnement dans la première position;
c) le récepteur transmet à l'unité d'évaluation les signaux, qui dépendent des grandeurs mesurées du rayonnement dans le champ de rayonnement caractéristique;
d) l'unité d'évaluation détermine la première position relative des objets l'un par rapport à l'autre en fonction des signaux reçus par le récepteur;
e) une modification de la position relative des deux objets l'un par rapport à l'autre est provoquée;
f) dans une deuxième position relative des objets l'un par rapport à l'autre, la source de rayonnement produit le champ de rayonnement caractéristique;
g) le récepteur mesure les grandeurs de rayonnement du rayonnement dans la deuxième position;
h) le récepteur transmet à l'unité d'évaluation les signaux, qui dépendent des grandeurs mesurées du rayonnement dans le champ de rayonnement caractéristique;
i) l'unité d'évaluation détermine la deuxième position relative des objets l'un par rapport à l'autre en fonction des signaux reçus par le récepteur;
j) la force provoquant la modification de position est calculée en fonction de la rigidité de l'assemblage des deux objets.

25. Procédé selon l'une des revendications 22 ou 23, dans lequel
a) dans une première position relative des objets l'un par rapport à l'autre, la source de rayonnement produit le champ de rayonnement caractéristique;
b) le récepteur mesure les grandeurs de rayonnement du rayonnement dans la première position;
c) le récepteur transmet à l'unité d'évaluation les signaux, qui dépendent des grandeurs mesurées du rayonnement dans le champ de rayonnement caractéristique;
d) l'unité d'évaluation détermine la première position relative des objets l'un par rapport à l'autre en fonction des signaux reçus par le récepteur;
e) une modification de la position relative des deux objets l'un par rapport à l'autre est provoquée;
f) dans une deuxième position relative des objets l'un par rapport à l'autre, la source de rayonnement produit le champ de rayonnement caractéristique;
g) le récepteur mesure les grandeurs de rayonnement du rayonnement dans la deuxième position;
h) le récepteur transmet à l'unité d'évaluation les signaux, qui dépendent des grandeurs mesurées du rayonnement dans le champ de rayonnement caractéristique;
i) l'unité d'évaluation détermine la deuxième position relative des objets l'un par rapport à l'autre en fonction des signaux reçus par le récepteur;
j) le couple provoquant la modification de position est calculé en fonction de la rigidité de l'assemblage des deux objets.
